(19) **Europäisches Patentamt / European Patent Office / Office européen des brevets**

(11) **EP 2 163 854 A1**

(12) # EUROPEAN PATENT APPLICATION

(43) Date of publication:
**17.03.2010 Bulletin 2010/11**

(51) Int Cl.:
**G01D 5/14** *(2006.01)*

(21) Application number: **08016116.9**

(22) Date of filing: **12.09.2008**

| | |
|---|---|
| (84) Designated Contracting States:<br>**AT BE BG CH CY CZ DE DK EE ES FI FR GB GR HR HU IE IS IT LI LT LU LV MC MT NL NO PL PT RO SE SI SK TR**<br>Designated Extension States:<br>**AL BA MK RS**<br><br>(71) Applicant: **Austriamicrosystems AG**<br>**8141 Unterpremstätten (AT)** | (72) Inventors:<br>• **Forsyth, Richard**<br>  **8010 Graz (AT)**<br>• **Riedmüller, Kurt**<br>  **8141 Unterpremstätten (AT)**<br><br>(74) Representative: **Epping - Hermann - Fischer**<br>**Patentanwaltsgesellschaft mbH**<br>**Ridlerstrasse 55**<br>**80339 München (DE)** |

(54) **Sensor arrangement and measuring method**

(57)    A sensor arrangement can be used with a multi-pole-pair magnetic strip (MAG) and comprises a sensor array (HA), combining means (CM) and detection means (DM). A plurality of magnetic field sensors (MS1, MS2) of the sensor array (HA) is configured to provide a sensor signal corresponding to a magnetic field intensity. The combining means (CM) are configured to generate a first and second channel signal (CH1, CH2) as a function of the sensor signals. The detection means (DM) are configured to generate a phase information (PHI) and an amplitude information (AI) as a function of the first and the second channel signal (CH1, CH2).

Fig 1

EP 2 163 854 A1

**Description**

The invention relates to a sensor arrangement which can be used with a multi-pole-pair magnetic strip and to a measuring method for determination of information related to a position of a multi-pole-pair magnetic strip.

For contactless position measurement of linearly moved objects in various applications, magnetic strips are used which comprise at least two alternating north and south poles. These magnetic strips are usually fixed with the movable objects and move in a small distance over a magnetic field sensor. Hereby, the property of the magnetic strip can be used that a vertical component of the magnetic field comprises a sinusoidal characteristic along the magnetic strip.

In many cases, the multi-pole-pair magnetic strips are used in combination with an array of magnetic field sensors. Such sensors are able to provide information related to an absolute position within the range of the length of one pole pair. For longer strokes, incremental methods can be used in combination with a second magnetic strip combined with a second magnetic sensor arrangement which allow identifying an initial magnetic pole pair as a so-called index position.

However, such a conventional arrangement has an increased space requirement due to the second magnetic strip and causes additional costs due to the second magnetic sensor arrangement.

It is an object of the invention to provide a sensor arrangement and a measuring method which make it possible to determine information related to a position of a multi-pole-pair magnetic strip with reduced complexity and effort.

The object is achieved with the subject matter of the independent patent claims. Embodiments and developments of the invention are subject matter of the dependent claims.

According to one embodiment, a sensor arrangement can be used with a multi-pole-pair magnetic strip. The sensor arrangement comprises a sensor array with a plurality of magnetic field sensors, each of the magnetic field sensors configured to provide a sensor signal corresponding to a magnetic field intensity.

The sensor arrangement further comprises combining means which are configured to generate a first and a second channel signal as a function of the sensor signals provided by the magnetic field sensors. Detection means are configured to generate a phase information and an amplitude information as a function of the first and the second channel signal.

During operation of the sensor arrangement, the multi-pole-pair magnetic strip is placed or moved over the sensor array or the plurality of magnetic field sensors, respectively. The magnetic field sensors are preferably arranged such within the sensor array that the sinusoidal characteristic of the magnetic field can be measured at at least two positions with a distance corresponding to a phase shift of basically 90° within the field characteristic. However, number and position of magnetic field sensors within the sensor array can be varied.

The combining means take some or all of the sensor signals and generate the first and the second channel signal as a combination of the used sensor signals. Hereby, the combining can comprise addition, subtraction, weighting or a combination of the aforementioned. Preferably, the first and the second channel signal correspond to phase shifted values of the sinusoidal magnetic field, wherein the phase shift preferably corresponds to basically 90°.

In the detection means, the first and the second channel signal are evaluated. A phase information is generated from the first and the second channel signal corresponding to a phase of the sinusoidal characteristic of the magnetic field. Furthermore, an amplitude information is generated corresponding to a theoretical maximum value of the sinusoidal characteristic or, in other words, an amplitude of the characteristic.

While in conventional sensor arrangements only a phase information is generated from respective sensor signals, in the proposed sensor arrangement also the amplitude information is generated. The phase information and the amplitude information can be provided to an evaluation circuit comprised by the sensor arrangement or being separate from the sensor arrangement, for example via a digital interface. In this case, the amplitude information is used to determine a respective pole pair corresponding to an actual position while the phase information is used to determine the position within the pole pair.

As a consequence, no additional magnetic strip and magnetic field sensors are necessary to determine an absolute position within the multi-pole-pair magnetic strip. In other words, the effort for providing the sensor arrangement and operating the sensor arrangement is reduced compared to conventional sensor arrangements.

Accordingly, in one embodiment, the sensor arrangement further comprises evaluation means which are configured to determine a relative position of the sensor array with respect to the magnetic strip along a linear direction as a function of the phase information and the amplitude information.

In one embodiment, the sensor arrangement can be used with a magnetic strip which effects a changing amplitude of the magnetic field intensity along the linear direction. In other words, an amplitude or strength of the magnetic field depends on the position along the magnetic strip.

In this embodiment, the evaluation means are configured to determine a coarse portion of the relative position as a function of the amplitude information and to determine a fine portion of the relative position as a function of the phase information. For example, the coarse portion corresponds to a specific pole pair of the multi-pole-pair magnetic strip and the fine portion corresponds to a position within a specific pole pair. Accordingly, if the pole pair is known, the fine position within the pole pair can be determined from the phase information.

In the case described above, where the magnetic field intensity changes over the linear direction of the magnetic strip, it is also possible that the amplitude values within one sinusoidal period changes. In this case, it may be necessary to apply a correction to the respective amplitude information, for example to a value being constant within the specific pole pair. However, to find, for example, an adequate correction factor, a position within the pole pair can be used. Accordingly, in one embodiment, the evaluation means are configured to perform an amplitude correction with the amplitude information as a function of the phase information.

In a further embodiment, the sensor arrangement comprises a temperature sensor for providing a temperature information, wherein the evaluation means are configured to determine the relative position further as a function of the temperature information. The values of the sensor signals can be temperature dependent, for example in response to temperature drift effects. As these temperature drift effects in many cases mainly have a linear temperature dependency, a temperature compensation of the amplitude information can easily be performed, for example based on a known or a determined temperature coefficient of the sensor array and/or the magnetic strip.

In a further embodiment, the sensor arrangement comprises a supply circuit which is configured to adjust a supply signal provided to the sensor array depending on a gain control signal. A gain control unit, which is comprised by the detection means, is configured to generate the gain control signal depending on the first and the second channel signal. In this embodiment, the detection means are configured to provide the amplitude information comprising the gain control signal and an amplitude signal depending on the first and the second channel signal.

During processing of the sensor signals within the sensor arrangement, the sensor signals or any signal derived from the sensor signals are usually converted to a digital signal at some place within the sensor arrangement. For an optimal use of the dynamic range of a needed analog-to-digital converter, the magnetic field sensors in the sensor array can be supplied with a supply signal such that the respective sensor signals are in a range of values corresponding to the desired dynamic range of the analog-to-digital converter. To this end, the gain control unit can evaluate the first and the second channel signal or any values or signals derived from the first and the second channel signal to determine and control whether the dynamic range is used appropriately. Accordingly, the gain control signal is generated which controls the supply circuit. However, as the absolute values of the first and the second channel signal do not depend only on the position within the magnetic strip but also on the gain control signal and the supply signal, a part of the amplitude information is included in the gain control signal. In other words, the amplitude information comprises the gain control signal and the amplitude signal which is based on the absolute values of the first and the second channel signal.

Therefore, in some embodiments, the determination of the relative position is based on the phase information, the amplitude signal, the gain control signal and the temperature information.

In an alternative embodiment, the evaluation means are configured to determine an initial position corresponding to an end of the magnetic strip along the linear direction. Herein, the determining of the initial position comprises a comparison of the amplitude information with a threshold level. Furthermore, the evaluation means determine the relative position as a function of the initial position and the phase information.

In this embodiment, a magnetic strip can be used which has an equally distributed magnetic field along the linear direction. However, at both end sides of the magnetic strip, the magnetic field intensity is reduced due to the fact that the magnetic field is only generated within the magnetic strip. In other words, magnetic strips have a geometrically well defined start and end edge. In case the magnetic strip moves out of the borders of the sensor array, the effective magnetic field intensity reduces below a value which can be measured in case the magnetic strip fully overlaps the sensor array. This is used to detect both ends of the magnetic strip. For example, the threshold level can be defined being adapted to the sensor arrangement. An initial period or pole pair can be identified by a crossing point of the amplitude information with respect to the threshold level. Depending on the direction of movement, the left or right initial period or pole pair is detected.

Also in this embodiment, no further means are necessary to determine the initial pole pair. Accordingly, also in this embodiment, effort and complexity of the sensor arrangement are reduced.

When knowing the initial pole pair, the relative position can be determined by detecting a movement over one or more of the pole pairs such that a specific pole pair can be found to which the phase information belongs. In other words, a coarse portion of the relative position is determined by the respective found pole pair and the fine portion of the relative position within the pole pair is determined by the phase information.

Also in this embodiment, a temperature sensor can be provided for generating a temperature information. The temperature information is used to correct the amplitude information as described before or to adapt the threshold level used for finding an initial position.

Furthermore, also in this embodiment, the sensor arrangement can comprise a supply circuit and a gain control unit for adjusting a supply signal provided to the sensor array, as described above.

The various embodiments of the sensor arrangement can be provided within an integrated circuit, for example within a single chip. Herein, the evaluation means can be either included in the integrated circuit or, alternatively, provided externally. In the case of external evaluation means, the integrated circuit can comprise a digital interface for providing the phase information, the amplitude information and, if available, the temperature information to the external evaluation means.

In an embodiment of a measuring method, a multi-pole-pair magnetic strip is provided. Furthermore, a sensor array is provided with a plurality of magnetic field sensors, wherein each of the magnetic field sensors is configured to provide a sensor signal corresponding to a magnetic field intensity. A first and a second channel signal are generated as a function of the sensor signals. Furthermore, a phase information and an amplitude information are generated as a function of the first and the second channel signal.

For example, the phase information and the amplitude information can be used to determine a relative position of the sensor array with respect to the magnetic strip along a linear direction as a function of the phase information and the amplitude information.

In one embodiment, determining the relative position comprises determining a coarse portion of the relative position as a function of the amplitude information and determining a fine portion of the relative position as a function of the phase information.

With reference to the description given above, the amplitude information can be used to determine a specific pole pair of the multi-pole-pair magnetic strip, in case the magnetic strip has a varying amplitude of its sinusoidal characteristic along the linear direction. Accordingly, the phase information determines a position within the specific pole pair.

As a consequence, the relative position can be determined with little effort solely depending on the sensor signal provided by the sensor array in response basically to the magnetic field generated by the magnetic strip.

In an alternative embodiment, determining the relative position comprises determining an initial position corresponding to an end of the magnetic strip along the linear direction, wherein determining the initial position comprises comparing the amplitude information with a threshold level. Accordingly, the relative position is determined as a function of the initial position and phase information.

As mentioned above, the magnetic field generated by the magnetic strip reduces at the two ends or edges of the magnetic strip. Accordingly, an amplitude of the sensor signals will be reduced at each end of the magnetic strip. This reduction can be detected by comparing the amplitude information gathered from the sensor signal to the threshold level. If the initial position is determined, crossing of respective pole pairs of the multi-pole-pair magnetic strip can be detected or counted, respectively, thus determining a specific pole pair to which the first and the second channel signal or the amplitude information, respectively, belong.

In the embodiments described above, determining the relative position can comprise determining a temperature information and determining the relative position further as a function of the temperature information. For example, a temperature compensation of the first and the second channel signal and/or the amplitude information and the phase information can be performed depending on the temperature information.

Furthermore, in various embodiments of the measuring method, a gain control signal can be generated depending on the first and the second channel signal. A supply signal provided to the sensor array is adjusted depending on the gain control signal and the amplitude information is provided comprising the gain control signal and an amplitude signal depending on the first and the second channel signal.

In other words, an automatic gain control of the sensor signals can be performed using the information included in the first and the second channel signal. However, not to lose any amplitude information which might be needed for evaluating and determining the relative position, both an amplitude signal corresponding to an absolute value of the first and the second channel signal as the gain control signal are taken together as the amplitude information.

The text below explains the invention in detail using exemplary embodiments with reference to the drawings, in which:

FIG. 1    is a first embodiment of a sensor arrangement,

FIG. 2    is a second embodiment of a sensor arrangement,

FIG. 3    is a vector diagram with channel signals,

FIG. 4    is an exemplary diagram of an amplitude signal and a gain control signal,

FIG. 5    shows various embodiments of magnetic strips,

FIG. 6    is a block diagram showing an evaluation scheme, and

FIG. 7    is a further embodiment of a magnetic strip.

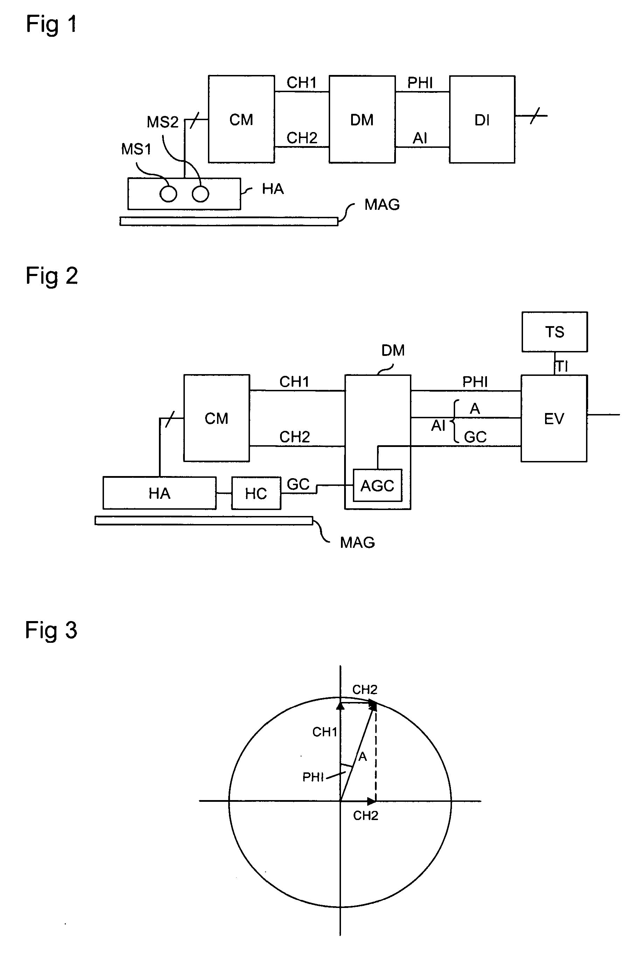

FIG. 1 shows an embodiment of a sensor arrangement which is used with a multi-pole-pair magnetic strip MAG. The sensor arrangement comprises a sensor array HA having a plurality of magnetic field sensors from which for reasons of a better overview only two magnetic field sensors MS1, MS2 are shown. For example, the magnetic field sensors MS1, MS2 comprise hall sensors which are configured to provide a sensor signal in response to a magnetic field intensity. In this case, the sensor array HA can also be called a hall array.

An output of the sensor array HA is coupled to combining means CM for providing the sensor signals generated by the magnetic field sensors MS1, MS2. The combining means CM are further coupled to detection means DM for providing a first and a second channel signal CH1, CH2 to the detection means DM. Outputs of the detection means DM are coupled to a digital interface DI for providing a phase information PHI and an amplitude information AI. The digital interface DI has an output to provide a digital signal corresponding to the amplitude information AI and the phase information PHI.

The magnetic strip MAG is preferably movable along a linear direction which is preferably basically parallel to sensor array HA. The magnetic field sensors MS1, MS2 detect the magnetic field intensity generated by the magnetic strip MAG and generate respective sensor signals which are provided to the combining means CM. The magnetic field generated by the magnetic strip MAG has a sinusoidal characteristic, wherein a period length of the characteristic depends on the length of a respective pole or pole pair of the magnetic strip MAG. The magnetic field sensors MS1, MS2 are preferably arranged such that the respective sensor signals can be taken or combined in the combining means CM for generating the first and the second channel signal CH1, CH2 having a phase distance of basically 90°. In this case, during further evaluation, a phase angle within the sinusoidal characteristic can be determined, for example, by means of a trigonometric function.

However, such phase angle in many cases depends only on a relative ratio of the first and the second channel signal CH1, CH2. Therefore, additionally, an amplitude information is generated from the first and the second channel signal CH1, CH2 corresponding to a measure for an absolute value of the first and the second channel signal CH1, CH2 or of the magnetic field intensity, respectively. In consequence, both phase information PHI and the amplitude information AI are provided to an output of the sensor arrangement via the digital interface DI. The information provided by the digital interface DI can then be used to determine a relative position of the sensor array HA with respect to the magnetic strip MAG. Herein, a relative position can also be an absolute position which is relative to a predetermined position on the magnetic strip MAG.

FIG. 2 shows another embodiment of a sensor arrangement which can be used with a multi-pole-pair magnetic strip MAG. As some of the elements shown in FIG. 2 are also comprised by the embodiment of FIG. 1, description of these elements is omitted here to avoid unnecessary repetitions.

The sensor arrangement further comprises a gain control unit AGC which is comprised by the detection means. Furthermore, evaluation means EV are comprises by the sensor arrangement which are coupled to the detection means DM and to a temperature sensor TS on their input side. An output of the gain control unit AGC is coupled to a supply circuit HC which is connected to the sensor array HA.

The temperature sensor is configured to provide a temperature information TI to the evaluation means EV. Furthermore, in this embodiment, the amplitude information AI comprises a gain control signal GC and an amplitude signal A, wherein the gain control signal GC is generated by the gain control unit AGC. The gain control signal GC is further provided to the supply circuit HC which is configured to adjust the supply signal provided to the sensor array HA. For example, the sensor array HA comprises hall sensors which are supplied by the supply signal. It is well known that the respective output signal of a hall sensor depends on its supply. Therefore, by adjusting the supply signal, an absolute value of respective sensor signals of the sensor array HA can be adjusted. The first and the second channel signal CH1, CH2 are generated from the respective sensor signals in the combining means CM such that an absolute value of the channel signals CH1, CH2 also depends on the supply signal of the sensor array HA. Accordingly, an amplitude information AI corresponding to a specific magnetic field intensity does both comprise an absolute amplitude signal A and the gain control signal GC which is used in the adjusting process of the supply signal.

In the evaluation means EV, the determination of the relative position of the sensor array with respect to the magnetic strip can be determined as a function of phase information PHI, amplitude signal A, gain control signal GC and temperature information TI.

With respect to the sinusoidal characteristic of the magnetic field intensity generated by the magnetic strip, the first and the second channel signal CH1, CH2 can represent a vector pair being basically orthogonal such that the vector pair corresponds to the phase information PHI and the amplitude information AI. In other words, the first and the second channel signal CH1, CH2 can represent orthogonal components of a two-dimensional intensity vector of the magnetic field intensity having a magnitude corresponding to the amplitude information AI and having a direction corresponding to the phase information PHI.

FIG. 3 shows a vector diagram with first and second channel signals CH1, CH2 which are drawn on a unit circle with a respective assumed coordinate system. For example, the first channel signal CH1 is shown as a sine portion of a resulting vector A, which results from a vector sum of the first and the second channel signal CH1, CH2. Accordingly, the second channel signal CH2 is a cosine portion of that resulting vector A. An angle of the vector with respect to the coordinate system and the unit circle comprises the phase information PHI. That angle can, for example, be determined from absolute values of the first and the second channel signal CH1, CH2 by means of a trigonometric function, for example via an arctangent function.

Accordingly, with reference to figures 1 and 2, the detection means DM described above can generate the phase information PHI from the first and the second channel signal CH1, CH2 based on the observations described for FIG. 3.

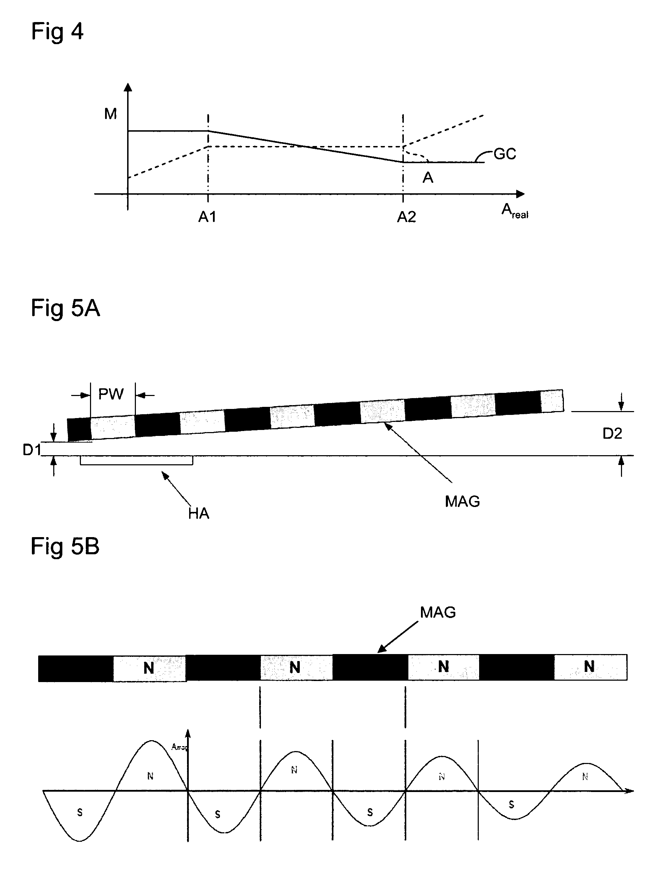

FIG. 4 shows the signal diagram of an amplitude signal A and a gain control signal GC as a function of an absolute magnetic field intensity $A_{real}$. The absolute value $A_{real}$ corresponds to an absolute value of the magnetic field intensity without influence of measurement deviations and so on.

Below a first value A1, the gain control signal GC has a first maximum value being basically constant. In other words, in this range of values, the gain control signal GC is taken such that the supply signal for supplying the sensor array is held at a first value which, for example, is necessary to perform a correct measurement with the magnetic field sensors. Accordingly, the amplitude signal A increases with an increasing value of the absolute magnetic field intensity $A_{real}$.

In a value range of the magnetic field intensity $A_{real}$ from A1 to A2, the gain control signal GC decreases with an increasing absolute value $A_{real}$ while the amplitude signal A stays basically constant.

For the absolute intensity $A_{real}$ being greater than A2, the gain control signal GC as a minimum value being preferably constant, while the amplitude signal A increases. In this case the supply signal for supplying the sensor array is held at a second value. Therefore, over the respective needed range of the absolute intensity $A_{real}$, the amplitude information AI comprises both the amplitude signal A and the gain control signal GC which can be used in combination to determine the absolute intensity $A_{real}$ in a backward direction. In this case, the amplitude information AI can be evaluated to determine the relative position of the sensor array HA with respect to the magnetic strip MAG.

As stated above, the relative position can be determined as a function of the phase information PHI and the amplitude information AI. In various embodiments, a coarse portion of the relative position is determined as a function of the amplitude information AI, while the fine portion of the relative position is determined as a function of the phase information. The determination of both coarse portion and fine portion can be performed within the evaluation means EV.

FIG. 5A shows an arrangement of a multi-pole-pair magnetic strip MAG which is arranged with respect to the sensor array HA in an angular fashion. To this end, the magnetic strip MAG which has a pole width PW has a distance D1 at its one end while the distance at the respective other end is D2 with respect to a line being parallel to the sensor array HA. For example, the magnetic strip MAG is mounted by means of a wedge. During operation of the sensor arrangement, the magnetic strip MAG or an object being mechanically coupled to the magnetic strip MAG, respectively, are moved along the linear direction determined by the sensor array HA.

Therefore, when moving the magnetic strip MAG, the absolute distance between the magnetic strip MAG and the sensor array HA varies. This variation results in a variation of the magnetic field intensity generated at the positions of the magnetic field sensors of the sensor array HA. As a consequence, the amplitude information AI generated within the sensor arrangement varies and can be used to determine, for example, which pole pair is located over the sensor array HA at the time of the measurement. Accordingly, a coarse position within the magnetic strip MAG with reference to FIG. 3, a fine position within the specific pole pair can be determined from the phase information PHI. Therefore, by a combination of the amplitude information AI and the phase information PHI, the position within the magnetic strip MAG with respect to the sensor array HA can be determined with a high precision and without the need for an additional magnetic strip or additional magnetic field sensors. In other words, the position is determined solely by the information provided through the sensor signals by the magnetic field sensors.

FIG. 5B shows another embodiment of a multi-pole-pair magnetic strip MAG which can be used with the sensor arrangement. In this embodiment, the magnetic strip MAG is produced such that it has a magnetic field intensity shown in the diagram below the magnetic strip MAG. As can be seen, the characteristic of the magnetic field intensity has a sinusoidal shape while the amplitude of the sinusoidal characteristic reduces from left to right. If such a magnetic strip MAG is used with one of the sensor arrangements described above, it is preferably arranged basically in parallel to the linear direction given by the sensor array HA. Accordingly, a linear movement along the linear direction results in a varying magnetic field intensity at the positions of the magnetic field sensors, similar to the arrangement described in FIG. 5A. Therefore, a position of the magnetic strip MAG with respect to the sensor array HA can be determined with a high precision solely using the amplitude information and the phase information derived from the sensor signals.

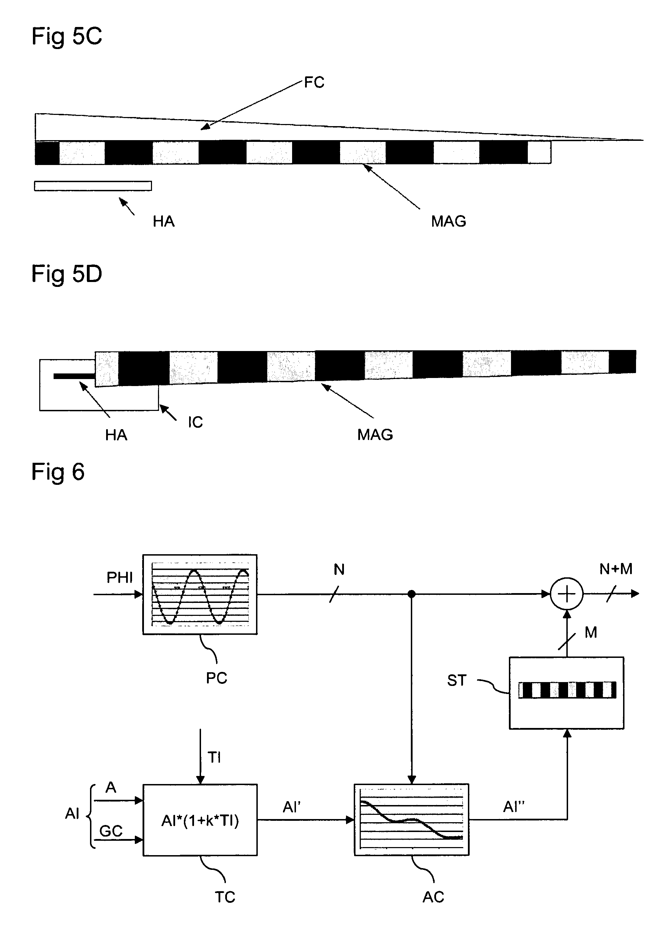

FIG. 5C shows another embodiment of a magnetic strip MAG in combination with the sensor array HA. In this embodiment, the magnetic strip MAG is arranged basically parallel to the sensor array HA but has placed a magnetic field concentrator FC above the magnetic strip MAG. The field concentrator FC, which has a triangular shape, effects that the resulting magnetic field intensity at the positions of the magnetic field sensors varies, if the magnetic strip MAG is moved in the linear direction over the sensor array HA. With respect to the description given above, also in this embodiment, the position of the magnetic strip MAG can be determined as a function of the amplitude information and the phase information derived from the respective sensor signals of the sensor array HA.

FIG. 5D shows a top view of another embodiment of a magnetic strip MAG having a trapezoid shape. The magnetic strip MAG can be moved over the sensor array HA included in an integrated circuit IC along the linear direction determined by the sensor array HA. During movement of the magnetic strip MAG, the distance of the lower edge of the magnetic strip MAG to the center of the sensor array HA varies due to the trapezoid shape. This results again in a varying amplitude of the magnetic field intensity generated at the positions of the magnetic field sensors. Also in this case, the position of the magnetic strip MAG with respect to the sensor array HA can be determined from amplitude information and phase information as described above.

FIG. 6 shows an exemplary block diagram of an evaluation scheme for determining the relative position. Accordingly, the phase information PHI is provided to a position correction block PC which outputs a digital position word with a word length of N bits. Furthermore, amplitude information AI comprising an amplitude signal A and a gain control signal GC is provided to a temperature control block TC. Furthermore, the temperature information TI is provided to the temperature control block TC which outputs a first corrected amplitude information AI'. The first corrected amplitude information AI' is provided to an amplitude correction block AC. Furthermore, the digital position word is provided to the amplitude correction block AC. A sector table ST receives a second corrected amplitude information AI'' and outputs a digital sector information with a word length of M bits. The digital position word and the digital sector information are combined to the relative position provided as a digital word having a word length of N+M, for example.

In the position correction block PC, the phase information PHI can be converted to the digital position word indicating a digital position value within a specific pole pair. In other words, the position word represents a fine portion of the relative position of the magnetic strip MAG. Furthermore, the phase information PHI can be corrected regarding an amplitude variation within one specific pole pair due to the varying magnetic field intensity. If the characteristic of the variation of the magnetic field intensity is known, the phase information PHI can be adjusted accordingly to compensate for the variation. Therefore, the accuracy of the position determination is increased.

In the temperature correction block TC, the amplitude information, namely a combination of the amplitude signal A and the gain control signal GC are compensated with respect to the temperature information TI. To this end, a linear temperature dependency, for example on a temperature coefficient k, is compensated by means of the exemplary compensation formula shown in the temperature correction block TC:

$$ AI' = AI \cdot (1 + k \cdot TI) $$

As the corrected amplitude information AI' preferably is a basis for a determination which pole pair of the magnetic strip MAG is over the sensor array HA, it is desirable that there is an appropriate dependency between amplitude information and the specific pole pair.

As the amplitude information further depends on the fine position within the specific pole pair, the digital position information comprising the fine position can be used to find an optimal matching between amplitude information and the specific pole pair. In other words, the fine position is used to perform correction or elimination of a systematic error which can be caused by the varying magnetic field intensity along the linear direction.

After the amplitude correction block AC, the second corrected amplitude information AI'' can be used to determine the specific pole pair, for example by a lookup table comprised by the sector table ST. Accordingly, the sector table ST provides a coarse portion of the relative position while the position correction block provides a fine portion of the relative position. Preferably, the word length N is higher than the word length M. Furthermore, the pole pair information provided by the sector table ST corresponds to most significant bits of the relative position while the digital position word corresponds to least significant bits of the relative position.

With reference to FIGs. 1 and 2, the evaluation of the amplitude information AI can further be used to determine an edge of the magnetic strip MAG which can, for example, serve as an initial position.

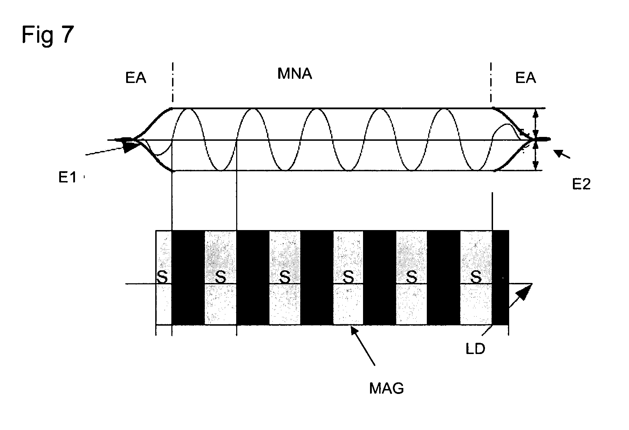

FIG. 7 shows an exemplary embodiment of a magnetic strip MAG having an equally distributed magnetic field intensity with a sinusoidal shape which is drawn above the magnetic strip MAG. However, at the edges E1, E2 of the magnetic strip MAG or the characteristic, respectively, an amplitude of the sinusoidal characteristic is reduced in these areas EA compared to the area MNA in-between. When moving the magnetic strip MAG along the linear direction, marked LD in this figure, the amplitude information can be evaluated and compared with a given threshold level to detect, when one of the ends E1, E2 of the magnetic strip is over the sensor array HA. The detection of one of the ends E1, E2 is used to define an initial position, for example related to the magnetic pole pair being adjacent to the determined end E1, E2.

When moving the magnetic strip MAG, respective pole pairs which get traversed by the movement can be detected or counted, respectively, to find the specific pole pair which is over the sensor array HA. With reference to FIG. 3, the fine position within the specific pole pair can be determined as a function of the phase information.

The specific threshold level which is used to detect the ends E1, E2 of the magnetic strip MAG can be stored in a register of a microprocessor, or in an electrically erasable programmable read-only memory, E2PROM, or in a one-time programming, OTP arrangement. Furthermore, a sensor arrangement which determines the relative position as described for FIG. 7, can also comprise a temperature sensor TS for providing a temperature information which can be used to adaptively adjust the threshold level depending on the temperature information.

Additionally, the sensor arrangement can comprise an automatic gain control as shown in FIG. 2. In further embodiments, the threshold level can be adjusted adaptively depending on the amplitude information in response to the magnetic field intensity measured during traversing the pole pairs in the medium area MNA. Accordingly, the threshold level does not necessarily have to be a fixed value for all possible magnetic strips which could be used with the sensor arrangement.

Reference list

| MAG | magnetic strip |
|------|------|
| HA | sensor array |
| MS1, MS2 | magnetic field sensor |
| CM | combining means |
| CH1, CH2 | channel signal |
| DM | detection means |
| PHI | phase information |
| AI | amplitude information |
| DI | digital interface |
| AGC | gain control unit |
| HC | supply circuit |
| GC | gain control signal |
| A | amplitude signal |
| EV | evaluation means |
| TS | temperature sensor |
| TI | temperature information |
| FC | field concentrator |
| PC | position correction |
| TC | temperature correction |
| AC | amplitude correction |
| ST | sector table |

**Claims**

1. Sensor arrangement to be used with a multi-pole-pair magnetic strip (MAG), the sensor arrangement comprising

   - a sensor array (HA) with a plurality of magnetic field sensors (MS1, MS2), each of the magnetic field sensors (MS1, MS2) configured to provide a sensor signal corresponding to a magnetic field intensity;
   - combining means (CM) which are configured to generate a first and a second channel signal (CH1, CH2) as a function of the sensor signals; and
   - detection means (DM) which are configured to generate a phase information (PHI) and an amplitude information (AI) as a function of the first and the second channel signal (CH1, CH2).

2. Sensor arrangement according to claim 1, further comprising evaluation means (EV) which are configured to determine a relative position of the sensor array (HA) with respect to the magnetic strip (MAG) along a linear direction as a function of the phase information (PHI) and the amplitude information (AI).

3. Sensor arrangement according to claim 2, wherein the evaluation means (EV) are configured to determine a coarse portion of the relative position as a function of the amplitude information (AI) and to determine a fine portion of the relative position as a function of the phase information (PHI).

4. Sensor arrangement according to claim 3, wherein the coarse portion corresponds to a specific pole-pair of the multi-pole-pair magnetic strip (MAG) and wherein the fine portion corresponds to a position within the specific pole-pair.

5. Sensor arrangement according to one of claims 2 to 4, wherein the evaluation means (EV) are configured to perform an amplitude correction with the amplitude information (AI) as a function of the phase information (PHI).

6. Sensor arrangement according to claim 2, wherein the evaluation means (EV) are configured

   - to determine an initial position corresponding to an end of the magnetic strip (MAG) along the linear direction, wherein determining the initial position comprises comparing the amplitude information (AI) with a threshold level; and
   - to determine the relative position as a function of the initial position and the phase information (PHI).

7. Sensor arrangement according to one of claims 2 to 6, further comprising a temperature sensor (TS) for providing a temperature information (TI), wherein the evaluation means (EV) are configured to determine the relative position further as a function of the temperature information (TI).

8. Sensor arrangement according to claim 7, wherein the evaluation means (EV) are configured to perform a temperature correction with the amplitude information (AI) as a function of the temperature information (TI).

9. Sensor arrangement according to one of claims 1 to 8, further comprising

   - a supply circuit (HC) which is configured to adjust a supply signal provided to the sensor array (HA) depending on a gain control signal (GC); and
   - a gain control unit (AGC) comprised by the detection means (DM), the gain control unit (AGC) configured to generate the gain control signal (GC) depending on the first and the second channel signal (CH1, CH2);
- wherein the detection means (DM) are configured to provide the amplitude information (AI) comprising the gain control signal (GC) and an amplitude signal (A) depending on the first and the second channel signal (CH1, CH2).

10. Measuring method, comprising:

- providing a multi-pole-pair magnetic strip (MAG);
- providing a sensor array (HA) with a plurality of magnetic field sensors (MS1, MS2), each of the magnetic field sensors (MS1, MS2) configured to provide a sensor signal corresponding to a magnetic field intensity;
- generating a first and a second channel signal (CH1, CH2) as a function of the sensor signals; and
- generating a phase information (PHI) and an amplitude information (AI) as a function of the first and the second channel signal (CH1, CH2).

11. Measuring method according to claim 10, further comprising determining a relative position of the sensor array (HA) with respect to the magnetic strip (MAG) along a linear direction as a function of the phase information (PHI) and the amplitude information (AI).

12. Measuring method according to claim 11, wherein determining the relative position comprises

- determining a coarse portion of the relative position as a function of the amplitude information (AI); and
- determining a fine portion of the relative position as a function of the phase information (PHI).

13. Measuring method according to claim 11, wherein determining the relative position comprises

- determining an initial position corresponding to an end of the magnetic strip along the linear direction, wherein determining the initial position comprises comparing the amplitude information (AI) with a threshold level; and
- determining the relative position as a function of the initial position and the phase information (PHI).

14. Measuring method according to one of claims 11 to 13, wherein determining the relative position comprises

- determining a temperature information (TI);

and
- determining the relative position further as a function of the temperature information (TI).

15. Measuring method according to one of claims 10 to 14, further comprising

- generating a gain control signal (GC) depending on the first and the second channel signal (CH1, CH2);
- adjusting a supply signal provided to the sensor array (HA) depending on the gain control signal (GC); and
- providing the amplitude information (AI) comprising the gain control signal (GC) and an amplitude signal (A) depending on the first and the second channel signal (CH1, CH2).

Fig 1

Fig 2

Fig 3

Fig 4

Fig 5A

Fig 5B

Fig 5C

FC

HA

MAG

Fig 5D

IC

HA

MAG

Fig 6

PHI

PC

N

N+M

M

ST

TI

A

AI

GC

AI*(1+k*TI)

AI'

AI"

TC

AC

## Fig 7

**EUROPEAN SEARCH REPORT**

Europäisches
Patentamt
European
Patent Office
Office européen
des brevets

Application Number

EP 08 01 6116

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 10 2005 046822 A1 (CONTINENTAL TEVES AG & CO OHG [DE]) 11 May 2006 (2006-05-11) | 1,2,10, 11 | INV. G01D5/14 |
| Y | * paragraphs [0020], [0021], [0040] - [0042]; figures 1,2 * | 1-5, 10-12 | |
| | ----- | | |
| X | US 6 573 710 B1 (SANTOS A JOHN [US] ET AL) 3 June 2003 (2003-06-03) | 1,10 | |
| Y | * abstract; figures 1,2 * | 1-5, 10-12 | |
| | ----- | | |
| X | DE 100 10 042 A1 (CONTINENTAL TEVES AG & CO OHG [DE]) 19 July 2001 (2001-07-19) | 1,10 | |
| Y | * columns 7-9; figures 3,4,8 * | 1-5, 10-12 | |
| | ----- | | |

TECHNICAL FIELDS
SEARCHED (IPC)

G01D

The present search report has been drawn up for all claims

| Place of search | Date of completion of the search | Examiner |
|---|---|---|
| Munich | 28 May 2009 | Kallinger, Christian |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

Europäisches
Patentamt

European
Patent Office

Office européen
des brevets

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☐ Only part of the further search fees have been paid within the fixed time limit. The present European search report has been drawn up for those parts of the European patent application which relate to the inventions in respect of which search fees have been paid, namely claims:

☒ None of the further search fees have been paid within the fixed time limit. The present European search report has been drawn up for those parts of the European patent application which relate to the invention first mentioned in the claims, namely claims:

see annex

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

Application Number

EP 08 01 6116

The Search Division considers that the present European patent application does not comply with the requirements of unity of invention and relates to several inventions or groups of inventions, namely:

```
1. claims: 1,2,3-5,10-12

      ... directed to a linear position sensor with simplified
      position determination via the evaluation of coarse an fine
      position signals as well as amplitude correction.
                              ---

2. claim: 6 and 13

      ... directed to a linear position sensor with the
      possibility to determine the initial position via the
      threshold evaluation of the amplitude signal.
                              ---

3. claims: 7, 8 and 14

      ... directed to a linear position sensor with temperature
      compensation via an integrated temperature sensor.
                              ---

4. claim: 9 and 15

      ... directed to a linear position sensor with improvement of
      the use of the dynamic range via a gain control of the
      sensor supply voltage.
                              ---
```

## ANNEX TO THE EUROPEAN SEARCH REPORT
## ON EUROPEAN PATENT APPLICATION NO.

EP 08 01 6116

This annex lists the patent family members relating to the patent documents cited in  the above-mentioned European search report.
The members are as contained in the European Patent Office EDP file on
The European Patent Office is in no way liable for these particulars which are merely given for the purpose of information.

28-05-2009

| Patent document cited in search report | Publication date | Patent family member(s) | | Publication date |
|---|---|---|---|---|
| DE 102005046822 A1 | 11-05-2006 | EP | 1797399 A2 | 20-06-2007 |
| | | WO | 2006035055 A2 | 06-04-2006 |
| US 6573710 B1 | 03-06-2003 | BR | 0006037 A | 13-03-2001 |
| | | EP | 1088202 A1 | 04-04-2001 |
| | | WO | 0062020 A1 | 19-10-2000 |
| | | FR | 2792403 A1 | 20-10-2000 |
| | | JP | 2002541470 T | 03-12-2002 |
| DE 10010042 A1 | 19-07-2001 | NONE | | |

EPO FORM P0459

For more details about this annex : see Official Journal of the European Patent Office, No. 12/82